# EUROPÄISCHE PATENTSCHRIFT

(11) **EP 1 826 533 B1**
(45) Veröffentlichungstag und Bekanntmachung des Hinweises auf die Patenterteilung: **03.02.2016**
(21) Anmeldenummer: 07002979.8
(22) Anmeldetag: 13.02.2007
(51) Int. Cl.: G01D 5/14, F15B 15/28

(54) **Magnetischer Sensor**
Magnetic sensor
Capteur magnétique

(30) Priorität: 22.02.2006 DE 102006008157
(43) Veröffentlichungstag der Anmeldung: 29.08.2007
(73) Patentinhaber: SICK AG, 79183 Waldkirch (DE)
(72) Erfinder: Baak, Josef, 79183 Waldkirch (DE); Machul, Olaf, Dr., 79104 Freiburg (DE)
(74) Vertreter: Ludewigt, Christoph

(56) Entgegenhaltungen:
- DE-A1- 10 013 196
- US-A- 5 201 838
- US-A1- 2004 017 187

## Beschreibung

Die Erfindung betrifft einen magnetischen Sensor nach dem Oberbegriff des Anspruchs 1 sowie ein Verfahren zur Bestimmung von Positionen eines Gebermagneten nach dem Oberbegriff des Anspruchs 16.

Aus der US 5,201,838 ist eine Kolben- und Zylinderanordnung mit Mitteln zum Bestimmen und Bestätigen einer Kolbenposition bekannt. Der Kolben bewegt sich axial in einem Zylinder und bewegt dabei einen mit dem Kolben verbundenen Dauermagneten. Ein Magnetfeld des Dauermagneten wird von einem Halleffekttransistor gemessen und daraus die Kolbenposition bestimmt. Diese Anordnung mit Mitteln zum Bestimmen der Kolbenposition hat den Nachteil, dass mit dem Halleffekttransistor nur ein kleiner Bereich der Kolbenstrecke erfasst werden kann. Zur Erfassung von Kolbenpositionen entlang des gesamten Hubweges sind mehrere Halleffekttransistoren entlang des Weges notwendig. Für lange Zylinderanordnungen sind dadurch nachteilig eine Vielzahl von Halleffekttransistoren notwendig. Zur Kolbenpositionsbestimmung müssen die einzelnen Halleffekttransistoren exakt positioniert werden und können jeweils nur eine Position bestimmen.

Weiter ist aus der DE 38 03 293 A1 ein magnetisch betätigter, analoger und elektrischer Wegaufnehmer für geradlinige Bewegungen bekannt, der an Messobjekten der verschiedensten Art verwendet werden kann. Der Wegaufnehmer ist gekennzeichnet durch zwei in einem den zu messenden Weg übersteigenden Abstand voneinander und in einem bestimmten Abstand parallel zur Bewegungsachse eines Dauermagneten angeordneten Hall-Sensoren. Um ein zur eindeutigen Kolbenpositionsbestimmung lineares Signal zu erhalten, ist der den Messweg übersteigende Abstand der beiden Hall-Sensoren notwendig, wobei zur Auswertung aus der Differenz der Absolutwerte der Hall-Spannungen der zwei Hall-Sensoren ein analoges elektronisches Ausgangssignal gebildet wird. Eine Anordnung der Hall-Sensoren in einem den Messbereich übersteigenden Abstand ist nachteilig, denn dadurch müssen beide Hall-Sensoren außerhalb des Hubweges des Kolbens montiert werden. Dies benötigt nicht nur einen großen Platzbedarf, sondern erschwert auch eine Montage der Hall-Sensoren an dem Zylinder oder kann sogar eine Montage außerhalb des Zylinders notwendig machen. Außerdem wird lediglich der Hubweg mit einem analogen Signal gemessen und keine Schaltsignale erzeugt.

Aus der DE 100 13 196 A1 wird eine Positionserfassungseinrichtung mit einer Sensoranordnung zur Erzeugung wenigstens eines Sensorsignals in Abhängigkeit eines sich vorbeibewegenden Körpers vorgeschlagen. Ein Sensorsignal wird mit wenigstens einem Referenzwert in einer Komparatoranordnung verglichen, wobei Steuermittel zur elektronischen Justierung der Sensoranordnung durch Veränderung des Referenzwertes vorgesehen sind und das Ausgangssignal der Komparatoranordnung ein Positionssignal zur Erfassung einer Relativposition von Körpern und Sensoranordnung bildet.

Aus der US 2004 0017187 A1 ist ein Sensorsystem bekannt zur Erkennung einer linearen Position gegenüber einem Magneten. Hierzu sind zwei Sensorbrücken vorgesehen die ein gemeinsames geometrisches Zentrum bilden und gegeneinander verdreht sind.

Der Erfindung liegt die Aufgabe zugrunde, einen verbesserten magnetischen Sensor sowie ein Verfahren zur Bestimmung von Positionen eines Gebermagneten bereitzustellen.

Der auf eine Vorrichtung gerichtete Teil der Aufgabe wird erfindungsgemäß nach Anspruch 1 gelöst.

Dadurch, dass die Sensorelemente die ganze Strecke erfassen, kann der magnetische Sensor an unterschiedlichen Positionen entlang der Strecke angebracht werden. Es ist keine genaue Ausrichtung zu der Strecke erforderlich. Dadurch wird eine Montage des magnetischen Sensors vereinfacht. Gerade bei Anlagen mit einer Vielzahl von zu überwachenden Strecken mit Gebermagneten werden Inbetriebnahmearbeiten deutlich vereinfacht, da der magnetische Sensor beliebig an der zu überwachenden Strecke positioniert werden kann und die gewünschten Positionssignale nicht mehr durch Verschiebung des Sensors oder der Sensorelemente festgelegt werden, sondern durch elektronische Vorgaben eingestellt werden können, indem die entsprechende Signalwertegruppe gespeichert wird.

Der Abstand der Sensorelemente ist dabei unabhängig von der Länge der Strecke. Dadurch kann der Abstand der Sensorelemente und damit die Ausdehnung des magnetischen Sensors beispielsweise sehr viel kürzer als die zu überwachende Strecke des Gebermagneten ausgebildet werden. Durch die kleinen Abmessungen des magnetischen Sensors kann dieser auch bei eingeschränkten Platzverhältnissen eingesetzt werden.

Der gleiche magnetische Sensor mit einem konstanten Abstand der Sensorelemente kann dabei auch für verschiedene Streckenlängen verwendet werden. Der magnetische Sensor kann somit in einer einzigen Ausführung für eine Vielzahl von verschiedenen Streckenlängen eingesetzt werden. Dies reduziert die Variantenvielfalt und vereinfacht somit den Einsatz des magnetischen Sensors.

Die Auswertung der Sensorelementsignale in der Auswerteeinheit ist auch für verschiedene Abstände der Sensorelemente zu einer Bewegungsachse des Gebermagneten geeignet mit wiederum einer Reduzierung der Variantenvielfalt und den entsprechenden Vorteilen.

Gemäß der Erfindung ist das wenigstens eine Schaltsignal elektronisch einstellbar. Die Schaltsignale können für verschiedene Positionen elektronisch eingestellt werden. Dabei braucht der magnetische Sensor nicht in seiner Position an dem Pneumatikzylinder geändert werden. Der Kolben wird hierzu einfach an eine gewünschte Position bewegt. Nun kann für diese Position eine Signalwertegruppe und damit das Positionsschaltsignal elektronisch eingestellt und abgespeichert werden.

Vorteilhaft ist der magnetische Sensor zur Erfassung der Position eines einen Gebermagnet tragenden Kolbens eines Pneumatikzylinders ausgebildet. Die Position des Kolbens kann durch den magnetischen Sensor unabhängig von einer Länge und eines Durchmessers des Pneumatikzylinders und unabhängig von einem Montageort des magnetischen Sensors an dem Pneumatikzylinder erfasst werden. Dadurch kann der magnetische Sensor in einer einzigen Ausführung an einer Vielzahl von unterschiedlichen Pneumatikzylindern eingesetzt werden.

In Weiterbildung der Erfindung ist der Gebermagnet als Dauermagnet ausgebildet. Dauermagnete werden bei Pneumatikzylindern als Gebermagnet eingesetzt. Diese zeichnen sich durch eine kompakte Bauform aus. Eine Stromversorgung ist für den Dauermagnet nicht notwendig.

Vorteilhaft sind die Sensorelemente als Hall-Sensoren ausgebildet. Hall-Sensoren haben den Vorteil, dass Änderungen des magnetischen Feldes des den Dauermagnet tragenden Kolbens direkt in eine auszuwertende Spannung umgewandelt werden kann, wenn der Hall-Sensor von einem Strom durchflossen wird. Die Spannung fällt dabei sowohl senkrecht zur Stromfluss-, als auch Magnetfeldrichtung am Hall-Sensor ab. Hall-Sensoren haben den Vorteil, dass die erzeugte Spannung linear abhängig von dem Magnetfeld ist. Verschiedene magnetische Felder können so ohne Sättigungsverhalten erfasst werden. Durch den Einsatz von zwei Hall-Sensoren entstehen zwei Spannungswerte, die die eindeutige Signalwertegruppe bilden und in der Auswerteeinheit einfach zu verarbeiten sind.

In einer weiteren Ausführungsform können die Sensorelemente als elektrische Spulen ausgebildet sein. Mit einer Spule in Verbindung mit einem elektrischen Schwingkreis wird abhängig von der Position des Dauermagneten ein Sensorsignal erzeugt. Das Sensorsignal wird dabei aufgrund einer Frequenzänderung des Schwingkreises erzeugt.

In einer Weiterbildung der Erfindung können die Sensorelemente als widerstandsändernde magnetische Sensorelemente ausgebildet sein. Bei diesen Sensorelementen wird eine durch das äußere Magnetfeld des Dauermagneten hervorgerufene Widerstandsänderung ausgenutzt. Diese Widerstandsänderung kann sehr einfach durch eine resultierende Stromänderung erfasst und ausgewertet werden. Dies kann beispielsweise durch eine Wheatstonebrücke realisiert werden. Die widerstandändernden magnetischen Sensorelemente weisen eine höhere Empfindlichkeit auf als Hall-Sensoren.

Vorteilhaft wird durch die Sensorelemente eine radiale Komponente des Magnetfeldes des Dauermagneten erfasst. Die Erfassung der radialen Komponente des Magnetfeldes führt zu einer sehr genauen und eindeutigen Erfassung des magnetischen Feldes des den Dauermagnet tragenden Kolbens. Die in der Regel flach ausgebildeten Hall-Sensoren sind dabei vorzugsweise parallel zu einer Bewegungsachse des Dauermagneten angeordnet. Durch diese Anordnung lässt sich der magnetische Sensor in einer optimalen flachen platzsparenden Bauform herstellen. In einer weiteren Ausführungsform kann auch eine axiale Komponente zur Erfassung des Magnetfeldes herangezogen werden.

In Weiterbildung der Erfindung ist wenigstens eine Taste zum Starten eines Einlernvorganges der jeweiligen Schaltsignale vorhanden. Dadurch ist es sehr einfach möglich, die jeweiligen Schaltsignale für die verschiedenen Kolbenpositionen durch eine einfache Tastenbetätigung einzulernen. Der Kolben wird hierzu an die gewünschte Position bewegt und daraufhin die Taste zum Starten des Einlernvorganges betätigt. Die entsprechende eindeutige Signalwertegruppe wird nun in der Auswerteeinheit für diese Kolbenposition gespeichert. Ist der Kolben in dieser eingelernten Position, wird von der Auswerteeinheit die eindeutige Signalwertegruppe erkannt und ein entsprechendes Schaltsignal erzeugt. Damit ist das Schaltsignal für diese Kolbenposition eingelernt. Nun kann der Kolben an eine neue Kolbenposition bewegt werden und wieder die Taste zum Starten des Einlernvorganges betätigt werden. Damit wird ein weiteres Schaltsignal für diese weitere Kolbenposition eingelernt. Da die entsprechende Signalwertegruppe eindeutig ist für jede entsprechende Kolbenposition, können eine Vielzahl von Schaltsignalen für verschiedene Kolbenpositionen eingelernt werden. Weil die einzustellenden Schaltsignale auch unabhängig von einer mechanischen Ausrichtung des magnetischen Sensors am pneumatischen Zylinder erfolgt, können die Schaltpositionen auch sehr eng beieinander liegen. So können zwei Schaltsignale in einem Abstand von wenigen Millimetern abhängig von der Kolbenposition eingelernt werden.

Es kann auch sinnvoll sein, eine Mehrzahl von Positionsschaltsignalen einzulernen, beispielsweise vier Schaltpunkte. Zwei Schaltpunkte, um jeweils eine Endposition des Kolbens zu erfassen und zwei weitere Schaltpunkte, um vor jedem Schaltpunkt der Endpositionen ein weiteres Signal zu erhalten, um den Kolben des Pneumatikzylinders frühzeitig abzubremsen.

Zusätzlich ist wenigstens eine Anzeigevorrichtung vorhanden zur Anzeige des Einlernvorganges. Dadurch ist eine visuelle Kontrolle des Einlernvorganges für einen Bediener des magnetischen Sensors möglich. Nach Betätigung der Taste zum Starten des Einlernvorganges und einer erfolgreichen Abspeicherung der Signalwertegruppe in der Auswerteeinheit wird ein optisches Signal über die Anzeigevorrichtung ausgegeben. Die Anzeigevorrichtung gibt hierzu ein Leuchtsignal aus oder es wird beispielsweise ein Blinksignal ausgegeben.

In Weiterbildung der Erfindung ist ein Ausgang der Auswerteeinheit zur Ausgabe des Schaltsignals zusätzlich als Eingang für Eingangssignale ausgebildet zum Einstellen der den Schaltsignalen entsprechenden Signalwertegruppen oder zum Starten eines Einlernvorganges. Über den Ausgang, der als Verbindungsleitung aus dem magnetischen Sensor nach außen geführt ist, ist es ist dadurch möglich den magnetischen Sensor in einen Einlernen-Zustand zu versetzen oder auch die Schaltsignale für verschiedene Positionen des Gebermagneten einzulernen. Dadurch entfallen zusätzliche Anschlussleitungen oder entsprechende Eingabevorrichtungen.

Das Einlernen der Schaltsignale oder der Start des Einlernvorgangs erfolgt in einer weiteren Ausführungsform über Anlegen von Impulsen an dem Eingang für die Eingangssignale. Die Impulse können einfach dadurch erzeugt werden, dass die Ausgangsleitung von der Auswerteeinheit, welche mit einer Ausgangsspannung beaufschlagt ist, in bestimmten Zeitabständen von außen auf Masse geschaltet wird, um die Impulse zu erzeugen. Die Impulse werden dann als Eingangsignale von der Auswerteeinheit ausgewertet. Die dynamische Änderung der Eingänge als Impulse kann von der Auswerteeinheit unmittelbar ausgewertet werden und von der Auswerteeinheit als Maßnahme zum Einstellen der Schaltpunkte erkannt werden. Statische Signale an dem Eingang führen dabei nicht zu einem ungewollten Einstellen der Schaltpunkte. Vorteilhafterweise sind die Impulse kodiert. Dadurch ist gewährleistet, dass keine Fehlbedienung von außen vorliegt. Durch die Kodierungen werden nur erwartete Impulse ausgewertet und führen somit zu einem Start des Einlernvorgang oder zur Einstellung der Schaltsignale.

Der Einlernvorgang kann auch gestartet werden durch einen vorbestimmten Bewegungsablauf der Gebermagnete. Dadurch können die Schaltpunkte ohne Verwendung eines zusätzlichen Eingangssignals eingestellt werden. Wird beispielsweise der Gebermagnet nach dem Einschalten in einer bestimmten Sequenz an dem magnetischen Sensor vorbei bewegt, wird ein Einlernvorgang gestartet. Anschließend wird die Position des Gebermagneten an einer Verweilposition eingelernt. Zur Bestätigung der eingelernten Position wird der Gebermagnet wiederum in eine vorbestimmte Position bewegt, beispielsweise eine Endlage des Kolbens des Pneumatikzylinders oder wiederum durch eine bestimmte Bewegungssequenz des Gebermagneten.

In einer weiteren Ausgestaltung der Erfindung sind mehrere Gebermagnete entlang der Strecke vorhanden mit unterschiedlichen Magnetfeldstärken. Dadurch, dass die Gebermagnete unterschiedliche Magnetfelder aufweisen, können diese unterschiedlichen Gebermagnete durch die Auswerteeinheit aufgrund der erfassten Magnetfeldstärken durch die Sensorelemente unterschieden werden. Somit ist es möglich eine lange Strecke mit verschiedenen Gebermagneten auszustatten, um jeweilige Magnetpositionen der verschiedenen Gebermagnete erkennen zu können.

Dabei liegt für eine Magnetposition eine über die Strecke eindeutige weitere Signalwertegruppe des weiteren Gebermagneten vor. Dadurch ist es möglich die einzelnen Magnetpositionen der verschiedenen Gebermagnete eindeutig voneinander zu unterscheiden, um eine eindeutige Positionsbestimmung des jeweiligen Gebermagneten vornehmen zu können. Beispielsweise sind bei einem Werkzeugschlitten einer Maschine verschiedene Gebermagnete in bestimmten Abständen voneinander angeordnet. Dieser mit den Gebermagneten ausgestattete Werkzeugschlitten bewegt sich linear entlang dem magnetischen Sensor, um die Position des Werkzeugschlittens auszuwerten. Die jeweiligen Gebermagnete erzeugen während der Bewegung entlang der Sensorelemente jeweils eindeutige Signalwertepaare, woraus auf die genaue Position der jeweiligen Gebermagnete und damit des Werkzeugschlittens geschlossen werden kann. Dadurch ist es möglich Bewegungsabläufe langer Werkzeuge zu überwachen.

In Weiterbildung der Erfindung ist das einer Magnetposition entsprechende Schaltsignal innerhalb eines Toleranzbereiches erzeugbar. Dadurch bleibt das Schaltsignal für eine längere Zeitdauer aktiv während eines Überfahrens einer bestimmten Position durch den Kolben. Gerade bei sehr schnellen Kolbenbewegungen wird die Dauer des Schaltsignals wirksam verlängert.

Zusätzlich ist der Toleranzbereich des Schaltsignals elektronisch einstellbar. Je nach Geschwindigkeit des Kolbens kann die Dauer des Schaltsignals bei der Kolbenbewegung eingestellt werden und dadurch verlängert oder verkürzt werden.

In einer weiteren Ausgestaltung der Erfindung sind die Sensorelemente in einem elektronischen Bauelement integriert. Dadurch lässt sich vorteilhaft der Integrationsgrad des magnetischen Sensors erhöhen und damit die Anzahl der elektronischen Bauteile reduzieren. Der magnetische Sensor lässt sich dadurch preiswerter herstellen. Durch die Integration der Sensorelemente werden zusätzlich Fertigungstoleranzen in den Abständen der Sensorelemente reduziert. Die eindeutigen Signalwertepaare können für jeden Sensor mit gleicher Qualität gewährleistet werden.

In Weiterbildung der Erfindung ist die Auswerteeinheit in einem Gehäuse gemeinsam mit den Sensorelementen angeordnet. Dadurch kann der Sensor sehr kompakt hergestellt werden. Die Auswerteeinheit ist dadurch sehr nahe an den Sensorelementen angebracht und mit diesen verbunden. Die Sensorsignale der Signalelemente können so ohne äußere Störeinflüsse von der Auswerteeinheit ausgewertet werden.

In Weiterbildung der Erfindung kann in einer weiteren Ausführungsform die Auswerteeinheit in einem mit dem magnetischen Sensor verbundenen Stecker angeordnet sein. Dadurch kann der magnetische Sensor sehr klein ausgebildet werden. Dies hat den Vorteil, dass dieser auch unter sehr beengten Platzverhältnissen am Pneumatikzylinder eingesetzt werden kann. Gerade bei einer Verwendung einer Vielzahl von Pneumatikzylindern auf engstem Raum, wie z. B. beim Einsatz an Verteileranlagen, sind sehr kleine Abmessungen des Sensors notwendig.

Zusätzlich ist der magnetische Sensor zur Halterung in einer Nut, insbesondere einer T- oder C-Nut des Pneumatikzylinders versenkbar ausgebildet. Dadurch kann der magnetische Sensor an den Pneumatikzylinder angebracht werden, ohne die äußeren Abmessungen des Pneumatikzylinders zu vergrößern. Dadurch ergeben sich keinerlei konstruktive Einschränkungen beim Einsatz des Pneumatikzylinders.

Sind eine Vielzahl von Schaltsignalen für verschiedene Kolbenpositionen vorhanden, ist vorteilhaft eine digitale Schnittstelle und/oder ein Bussystem zur Ausgabe der Schaltsignale vorgesehen. Dadurch lassen sich die Schaltsignale ohne zusätzliche Verdrahtung an eine übergeordnete Steuerung weiterleiten zur weiteren Auswertung. Über die digitale Schnittstelle und/oder das Bussystem lässt sich der magnetische Sensor auch sehr einfach in bestehende Systeme mit z. B. vorhandenen Feldbussen integrieren. Bei sehr schnellen Kolbenbewegungen ist es notwendig, in kurzer Zeit eine große Anzahl von Schaltsignalen zu übertragen. Hierzu eignet sich insbesondere eine digitale Schnittstelle, wie z. B eine serielle Schnittstelle oder ein Feldbussystem wie Profibus, Devicenet, Interbus oder andere Bussysteme.

In Weiterbildung der Erfindung ist die Auswerteeinheit durch einen Mikrocontroller gebildet. In dem Mikrocontroller ist ein Programm zur Auswertung der Signalwertepaare gespeichert. Durch Speichern des Programms in einem wiederbeschreibbaren Speicher des Mikrocontrollers kann dieses auch erneuert werden. Eine analoge Auswertung der Sensorsignale der Sensorelemente kann vorteilhaft direkt durch einen in dem Mikrocontroller vorhandenen Analog-Digital-Wandler ausgewertet werden. Durch das Programm im Mikrocontroller können auch sehr einfach die Schaltsignale erzeugt werden, welche aus den Sensorsignalwertegruppen generiert werden. Alle Schritte zur Signalverarbeitung können so in dem Mikrocontroller enthalten sein. Beispielsweise kann ein 8 Bit Mikrocontroller der 8051-Familie eingesetzt werden. Durch den Einsatz des Mikrocontrollers lassen sich notwendige Aufgaben zur Auswertung der Sensorsignale optimal auf einem Bauelement realisieren. Damit kann die Auswerteeinheit sehr klein und kompakt ausgeführt werden.

Der auf ein Verfahren gerichtete Teil der Aufgabe wird erfindungsgemäß nach Anspruch 16 gelöst.

Durch das Verfahren wird durch die wenigstens zwei Sensorsignale abhängig von der Magnetposition des Gebermagneten die eindeutige Signalwertegruppe erzeugt. Aus dieser eindeutigen Signalwertegruppe wird dann das Schaltsignal erzeugt. Somit können mit dem erfindungsgemäßen Verfahren eine Vielzahl von Schaltsignalen für verschiedene Positionen des Gebermagneten erzeugt werden, ohne die Sensorelemente zu verschieben. Bei diesem Verfahren können aus den eindeutigen Sensorsignalen beliebig viele Schaltsignale für alle Magnetpositionen des Gebermagneten des Kolbens erzeugt werden.

In Weiterbildung der Erfindung werden die Sensorsignale durch eine radiale Komponente des magnetischen Feldes zur Bewegungsrichtung des Gebermagneten erzeugt. Dies hat den Vorteil, dass die Auswertung der radialen Komponente zu einer höheren Auflösung und einer einfacheren Erreichbarkeit der Eindeutigkeit der Sensorsignale führt, als eine Auswertung der axialen Komponente des Magnetfeldes des Gebermagneten bei einer Anordnung der Pole des Gebermagneten längs zu der Bewegungsrichtung des Gebermagneten. Damit kann die Position des Kolbens sehr genau ausgewertet und festgestellt werden.

Im Folgenden wird die Erfindung an Hand von Ausführungsbeispielen unter Bezugnahme auf die Zeichnung im Einzelnen erläutert.

In der Zeichnung zeigt:
Figur 1
   eine schematische Darstellung eines erfindungsgemäßen magnetischen Sensors mit einem einen Gebermagnet tragenden Kolben;
Figur 2
   ein Diagramm mit einer schematischen Darstellung von Signalwertegruppen.

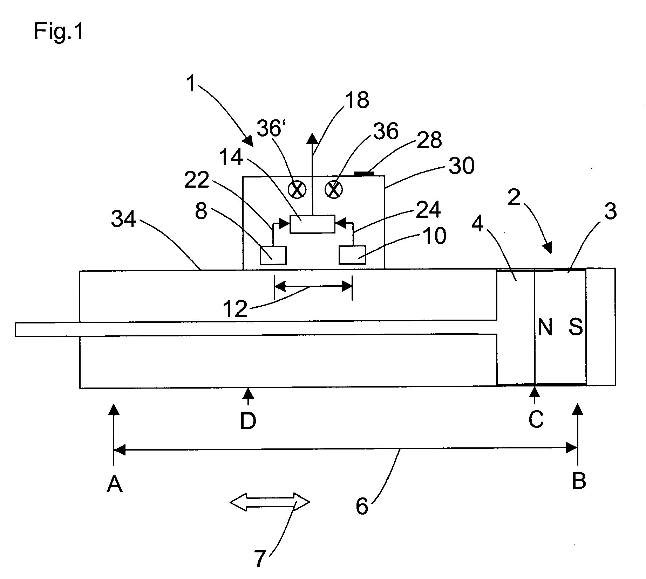

Figur 1 zeigt einen Pneumatikzylinder 34 mit einem einen Gebermagnet 2 tragenden Kolben 4. Der Kolben 4 kann in Bewegungsrichtung 7 über die gesamte Strecke 6 bewegt werden. Der Gebermagnet 2 hat dabei eine magnetische Ausrichtung parallel zur Bewegungsrichtung 7 des Kolbens 4. Der Gebermagnet 2 ist dabei als Dauermagnet 3 ausgebildet. Die nicht dargestellten magnetischen Linien eines Magnetfeldes verlaufen dabei außerhalb des Dauermagneten 3 zwischen dem mit N bezeichneten Nordpol und dem mit S bezeichneten Südpol. Der Kolben 4 steht wie dargestellt bei der Position C.

Solche Pneumatikzylinder 34 finden Anwendung im industriellen Bereich zur Bewegung von Stellgliedern in Verteileranlagen. Häufig kommt eine Vielzahl solcher Pneumatikzylinder 34 zum Einsatz, um viele verschiedene Bewegungsvorgänge zu realisieren.

An dem Pneumatikzylinder 34 ist in diesem Ausführungsbeispiel etwa in der Mitte der Strecke 6 ein magnetischer Sensor 1 angebracht zur Erfassung der Bewegung des den Dauermagnet 3 tragenden Kolbens 4. Die Strecke 6 wird im Weiteren als Hubweg bezeichnet. Der magnetische Sensor 1 weist dabei ein erstes Sensorelement 8 und ein zweites Sensorelement 10 auf. Diese Sensorelemente 8 und 10 sind entlang des Hubweges in einem Abstand 12 zueinander angeordnet. Dabei ist der Abstand 12 der Sensorelemente 8 und 10 kleiner als der Hubweg 6. Ein erstes Sensorsignal 22 des ersten Sensorelementes 8 und ein zweites Sensorsignal 24 des zweiten Sensorelementes 10 werden einer Auswerteeinheit 14 zugeführt. Die Auswerteeinheit 14 weist einen Ausgang für ein Schaltsignal 18 auf.

Die zwei Sensorelemente 8 und 10 sind vorzugsweise als Hall-Sensoren ausgebildet. Werden die Hall-Sensoren dem Magnetfeld des Dauermagneten 3 ausgesetzt und von einem Strom durchflossen, so liefert der Hall-Sensor eine Ausgangsspannung, die proportional zum Produkt aus magnetischer Feldstärke und dem Strom ist. Die Ausgangsspannung ist damit abhängig von einer Entfernung des Dauermagneten 3 zu dem jeweiligen Sensorelement 8 und 10. Bewegt sich der Kolben 4 mit dem Dauermagneten 3 von der Position A zur Position B, so werden die beiden Sensorelemente 8 und 10 über den gesamten Hubweg 6 von einem magnetischen Fluss des Dauermagneten 3 erfasst.

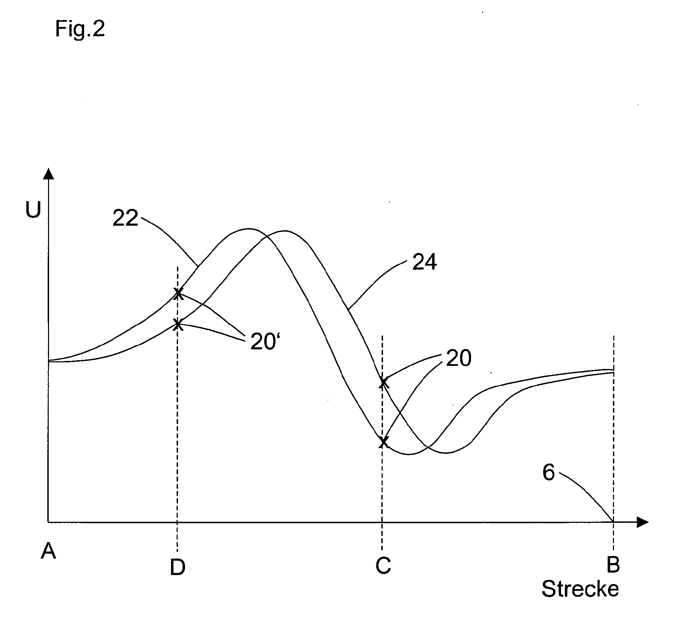

Die Stärke des magnetischen Flusses ändert sich dabei entsprechend der Darstellung der Fig. 2, die die beiden Hall-Spannungen 22 und 24 der beiden Sensorelemente 8 und 10 in Abhängigkeit des Hubweges zeigen. Der Hubweg 6 des Kolbens ausgehend von Position A in Richtung Position B ist dabei auf der Abszisse aufgetragen. Auf der Ordinate ist die Ausgangsspannung U der Hall-Sensoren aufgetragen. Die beiden Sensorsignale 22 und 24 bilden dabei für jede Position des den Dauermagnet tragenden Kolbens eine eindeutige Signalwertegruppe 20. Bei dieser Signalwertegruppe 20 handelt es sich bei diesem Ausführungsbeispiel um ein Signalwertepaar. An der Kolbenposition C beispielsweise haben die Signale der Signalwertegruppe 20 andere eindeutige Signalpegel als die Signale der Signalwertegruppe 20' an Position D.

Wie in Figur 1 dargestellt, wird die Signalwertegruppe der Auswerteeinheit 14 zur Auswertung zugeführt. In der Auswerteeinheit 14 wird bei einer entsprechenden Signalwertegruppe ein Schaltsignal 18 erzeugt, so dass das Schaltsignal 18 einer gewünschten Position, z.B. Position C, des Kolbens 4 entspricht.

Zur Einstellung des Schaltsignals 18 wird der Kolben 4 an eine gewünschte Position C bewegt. An dieser Position C wird nun von den Sensorelementen 10 und 12 eine eindeutige Signalwertegruppe der Auswerteeinheit 14 zugeführt. Mit Hilfe einer Taste 28 kann ein Einlernvorgang gestartet werden, um das Schaltsignal 18 für diese Position C des Kolbens 4 elektronisch in der Auswerteeinheit 14 abzuspeichern. Die Auswerteeinheit 14 weist hierzu einen Speicher auf. Mit Hilfe von Anzeigevorrichtungen 36 und 36' kann dieser Einlernvorgang für einen Bediener angezeigt werden. Über diese optische Rückmeldung kann das erfolgreiche Einlernen kontrolliert werden.

Es können auch mehrere Schaltsignale 18 eingelernt bzw. gespeichert werden. Hierzu muss der Kolben 4 lediglich an eine weitere neu einzulernende Position D bewegt werden und ein erneuter Einlernvorgang mit der Taste 28 gestartet werden. Nacheinander können so eine Vielzahl von Schaltsignalen 18 eingelernt werden, ohne den magnetischen Sensor 1 relativ zu dem Pneumatikzylinder 34 bewegen zu müssen. Die eingelernten Kolbenpositionen können sehr dicht beieinander liegen und zwar beispielsweise in einem geringeren Abstand als der Abstand 12 der Sensorelemente 8 und 10.

Für eine einfache Anwendung des Pneumatikzylinders 34 werden beispielsweise vier Schaltsignale 18 benötigt. Zwei Schaltsignale 18 werden für die Endpositionen A und B benötigt. Zusätzlich zu den Endpositionen werden noch zwei weitere Schaltsignale 18 jeweils in geringem Abstand zu den bestehenden zwei Schaltsignalen 18 zur Hubmitte hin benötigt, um eine Abbremsung des Kolbens 4 vor den Endpositionen zu ermöglichen. Zur Anzeige weiterer Positionen des Kolbens 4 können noch weitere Schaltsignale 18 eingelernt werden.

Die Schaltsignale 18 können über Signalleitungen, digitale Schnittstellen oder auch über Bussysteme ausgegeben werden. Signalleitungen sind dann optimal, wenn nur wenige Schaltsignale 18 ausgegeben werden sollen. Digitale Schnittstellen bieten sich an, wenn eine Vielzahl von Schaltsignalen 18 ausgegeben werden sollen.

Die Auswerteeinheit 14, die Sensorelemente 8 und 10 sowie die Taste 28 zum Einlernen der Schaltsignale 18 und die Anzeigevorrichtung 36 sind vorteilhaft in einem Gehäuse 30 untergebracht. Dadurch kann der magnetische Sensor 1 sehr kompakt ausgeführt werden und enthält alle für die Funktion des magnetischen Sensors 1 notwendigen Bauteile. Lediglich die Signalleitungen bzw. die digitale Schnittstelle oder das Bussystem brauchen noch mit einer übergeordneten Steuerung verbunden werden.

Die Auswerteeinheit 14 wird vorzugsweise als Mikrocontroller ausgeführt. Mikrocontroller haben den Vorteil, dass die notwendigen Funktionselemente zur Ausführung der Erfindung bereits in dem Mikrocontroller integriert sind. Durch ein entsprechendes Programm werden die Funktionselemente angesteuert und ausgewertet. So weisen Mikrocontroller einen Speicher für ein Programm zur Auswertung des Signalwertepaares auf. Der Speicher kann dabei wiederbeschreibbar ausgeführt sein. Weiterhin weist der Mikrocontroller einen Analog/Digital Wandler auf zur Umwandlung der analogen Sensorsignale 22 und 24 des ersten und zweiten Sensorelementes 8 und 10. Schließlich besitzt der Mikrocontroller geeignete Ausgänge zur Ausgabe des Schaltsignals 18. Die Verwendung des Mikrocontrollers erlaubt auch eine kompakte Bauweise des magnetischen Sensors 1.

Die Sensorelemente 8 und 10 können auch in einem elektronischen Bauteil integriert sein. Damit ist der Abstand 12 zwischen den Sensorelementen 8 und 10 genau eingestellt. Abstandstoleranzen oder auch Empfindlichkeitstoleranzen der Sensorelemente 8 und 10 können dadurch verringert werden.

### Bezugszeichenliste

- 1: Magnetischer Sensor
- 2: Gebermagnet
- 3: Dauermagnet
- 4: Kolben
- 6: Hubweg, Strecke
- 7: Bewegungsrichtung
- 8: erstes Sensorelement
- 10: zweites Sensorelement
- 12: Abstand Sensorelemente
- 14: Auswerteeinheit
- 18: Schaltsignal
- 20, 20': Signalwertegruppe
- 22: erstes Sensorsignal
- 24: zweites Sensorsignal
- 28: Taste
- 30: Gehäuse
- 34: Pneumatikzylinder
- 36, 36': Anzeigevorrichtung
- A, B, C, D: Magnetpositionen des Kolbens

## Patentansprüche

1. Magnetischer Sensor (1) zur Bestimmung von Positionen (A, B, C, D) eines Gebermagneten (2) entlang einer Strecke (6) mit wenigstens zwei Sensorelementen (8, 10), wobei die Sensorelemente entlang der Strecke in einem Abstand zueinander angeordnet sind und die beide wenigstens eine Komponente eines Magnetfeldes des Gebermagneten (2) erfassen, wobei eine mit den Sensorelementen (8, 10) verbundene Auswerteeinheit (14) zur Erzeugung mehrerer, jeweils einer gewünschten Magnetposition (A, B, C, D) entsprechenden Schaltsignale (18) und die Schaltsignale für verschiedene Positionen elektronisch einstellbar sind,
wobei jedes Sensorelement (8, 10) die gesamte Strecke (6) erfasst und damit der Abstand der Sensorelemente unabhängig von der Länge der Strecke ist und für jede gewünschte Magnetposition (A, B, C, D) eine über die Strecke (6) eindeutige Signalwertegruppe (20, 20') der beiden Sensorelemente (8, 10) zur Erzeugung des Schaltsignals in der Auswerteeinheit (14) vorliegt und diese ein eindeutiges Positionssignal generiert, **dadurch gekennzeichnet, dass** ein Abstand (12) der Sensorelemente (8, 10) kleiner als die Strecke (6) ist.

2. Magnetischer Sensor nach Anspruch 1, **dadurch gekennzeichnet, dass** dieser zur Erfassung der Position eines einen Gebermagnet (2) tragenden Kolbens eines Pneumatikzylinders (34) ausgebildet ist.

3. Magnetischer Sensor nach einem der vorhergehenden Ansprüche, **dadurch gekennzeichnet, dass** der Gebermagnet (2) ein Dauermagnet (3) ist.

4. Magnetischer Sensor nach einem der vorhergehenden Ansprüche, **dadurch gekennzeichnet, dass** die Sensorelemente (8, 10) Hall-Sensoren oder elektrische Spulen oder widerstandsändernde magnetische Elemente sind.

5. Magnetischer Sensor nach einem der vorhergehenden Ansprüche, **dadurch gekennzeichnet, dass** die Sensorelemente (8, 10) eine radiale Komponente des Magnetfeldes des Gebermagneten (2) erfassen.

6. Magnetischer Sensor nach einem der vorhergehenden Ansprüche, **dadurch gekennzeichnet, dass** die Sensorelemente (8, 10) eine axiale Komponente des Magnetfeldes des Gebermagneten (2) erfassen.

7. Magnetischer Sensor nach Anspruch 6, **dadurch gekennzeichnet, dass** wenigstens eine Taste (28) zum Starten eines Einlernvorganges der Schaltsignale (18) vorhanden ist und wenigstens eine Anzeigevorrichtung (36, 36') vorhanden ist zur Anzeige des Einlernvorganges.

8. Magnetischer Sensor nach einem der vorhergehenden Ansprüche, **dadurch gekennzeichnet, dass** ein Ausgang der Auswerteeinheit (14) zur Ausgabe des Schaltsignals (18) zusätzlich als Eingang für Eingangssignale ausgebildet ist zum Einstellen der dem Schaltsignal (18) entsprechenden Signalwertegruppe oder zum Starten eines Einlernvorganges.

9. Magnetischer Sensor nach Anspruch 8, **dadurch gekennzeichnet, dass** die Eingangsignale kodierte Impulsfolgen sind.

10. Magnetischer Sensor nach einem der vorhergehenden Ansprüche, **dadurch gekennzeichnet, dass** mehrere Gebermagnete entlang der Strecke vorhanden sind und diese unterschiedliche Magnetfeldstärken aufweisen und für wenigstens eine weitere gewünschte Magnetposition (A, B, C, D) eine über die Strecke eindeutige weitere Signalwertegruppe (20, 20') des weiteren Gebermagneten vorliegt.

11. Magnetischer Sensor nach einem der vorhergehenden Ansprüche, **dadurch gekennzeichnet, dass** das einer Magnetposition entsprechende Schaltsignal innerhalb eines Toleranzbereiches erzeugbar ist, der elektronisch einstellbar ist.

12. Magnetischer Sensor nach einem der vorhergehenden Ansprüche, **dadurch gekennzeichnet, dass** die Sensorelemente (8, 10) in einem elektronischen Bauelement integriert sind.

13. Magnetischer Sensor nach einem der vorhergehenden Ansprüche, **dadurch gekennzeichnet, dass** die Auswerteeinheit (14) in einem Gehäuse (30) gemeinsam mit den Sensorelementen (8, 10) angeordnet ist.

14. Magnetischer Sensor nach einem der vorhergehenden Ansprüche, **dadurch gekennzeichnet, dass** dieser zur Halterung in einer Nut (40) versenkbar, insbesondere einer T- oder C-Nut des Pneumatikzylinders (34), ausgebildet ist.

15. Magnetischer Sensor nach einem der vorhergehenden Ansprüche, **dadurch gekennzeichnet, dass** eine digitale Schnittstelle und/oder ein Bussystem zur Ausgabe der Schaltsignale (18) vorhanden ist und die Auswerteeinheit durch einen Mikrocontroller gebildet ist.

16. Verfahren zur Bestimmung von Positionen (A, B, C, D) eines Gebermagneten (2) entlang einer Strecke (6), bei dem von wenigstens zwei Sensorelementen Sensorsignale (22, 24) an zwei zueinander beabstandeten Orten in Richtung (7) der Strecke (6), in einem bestimmten Abstand radial zur Bewegungsachse des Gebermagneten (2) durch ein magnetisches Feld des Gebermagneten (2) erzeugt werden, wobei abhängig von den jeweiligen Positionen (A, B, C, D) des Gebermagneten (2) mehrere Schaltsignale (18) ausgegeben werden und die Schaltsignale für verschiedene Positionen elektronisch eingestellt werden, wobei zu jeder Magnetposition (A, B, C, D) des Gebermagneten über die gesamte Strecke (6) die beiden entsprechenden Sensorsignale (22, 24) vorliegen und damit der Abstand der Sensorelemente unabhängig von der Länge der Strecke ist und die beiden Sensorsignale (22, 24) ein für die momentane Magnetposition (A, B, C, D) des Gebermagneten (2) eindeutiges Signalwertepaar (20, 20') bilden und dieses zur Erzeugung des Schaltsignals (18) ausgewertet wird und ein eindeutiges Positionssignal generiert wird, **dadurch gekennzeichnet, dass** ein Abstand (12) der Sensorelemente (8, 10) kleiner als die Strecke (6) ist.

17. Verfahren nach Anspruch 16 , **dadurch gekennzeichnet, dass** die Sensorsignale (22, 24) durch Erfassen einer radialen Komponente des magnetischen Feldes zur Bewegungsrichtung (7) des Gebermagneten (2) mittels der Sensorelemente erzeugt werden.

18. Verfahren nach einem der vorhergehenden Ansprüche 16 bis 17, **dadurch gekennzeichnet, dass** die Schaltsignale (18) jeweils eingelernt werden.

19. Verfahren nach einem der vorhergehenden Ansprüche 16 bis 18, **dadurch gekennzeichnet, dass** das einer Magnetposition entsprechende Schaltsignal innerhalb eines Toleranzbereiches erzeugt wird und der Toleranzbereich elektronisch eingestellt wird.

20. Verfahren nach einem der vorhergehenden Ansprüche 16 bis 19, **dadurch gekennzeichnet, dass** die dem Schaltsignal (18) entsprechende Signalwertegruppe oder ein Starten eines Einlernvorgangs mit kodierten Impulsfolgen auf einem kombinierten Eingang und Ausgang der Auswerteeinheit (14) zur Ausgabe der Schaltsignale (18) eingeben werden.

## Claims

1. A magnetic sensor (1) for determining positions (A, B, C, D) of an activation magnet (2) along a distance (6) with at least two sensor elements (8, 10), wherein the sensor elements are arranged at a spacing from one another along the distance and which both detect at least one component of a magnetic field of the activation magnet (2), wherein an evaluation unit (14) connected with the sensor elements (8, 10) for generating a plurality of switching signals (18) corresponding to a respective desired magnet position (A, B, C, D) is provided and with the switching signals being electronically settable for different positions,
wherein each sensor element (8, 10) detects the entire distance (6) and thus the spacing of the sensor elements is independent of the length of the distance and an unambiguous signal value group (20, 20') of the two sensor elements (8, 10) is present over the distance (6) for each desired magnet position (A, B, C, D) for generating the switching signal in the evaluation unit (14), and wherein the latter generates an unambiguous position signal, **characterized in that** a spacing (12) of the sensor elements (8, 10) is smaller than the distance (6).

2. A magnetic sensor according to claim 1, **characterized in that** it is configured for detecting the position of a piston of a pneumatic cylinder (34) carrying the activation magnet (2).

3. A magnetic sensor according to one of the preceding claims, **characterized in that** the activation magnet (2) is a permanent magnet (3).

4. A magnetic sensor according to any one of the preceding claims, **characterized in that** the sensor elements (8, 10) are Hall-sensors or electrical coils or resistance-varying magnetic elements.

5. A magnetic sensor according to any one of the preceding claims, **characterized in that** the sensor elements (8, 10) detect a radial component of the magnetic field of the activation magnet (2).

6. A magnetic sensor according to any one of the preceding claims, **characterized in that** the sensor elements (8, 10) detect an axial component of the magnetic field of the activation magnet (2).

7. A magnetic sensor according to claim 6, **characterized in that** at least one key (28) for starting a teaching mode of the switching signals (18) is present and at least one display apparatus (36, 36') is present for displaying the teaching process.

8. A magnetic sensor according to any one of the preceding claims, **characterized in that** an output of the evaluation unit (14) for outputting the switching signal (18) is additionally configured as an input for incoming signals for setting the signal value group corresponding to the switching signal (18) or for starting a teaching mode.

9. A magnetic sensor according to claim 8, **characterized in that** the incoming signals are coded impulse sequences.

10. A magnetic sensor according to any one of the preceding claims, **characterized in that** a plurality of activation magnets are present along the distance and they have different magnetic field strengths; and **in that**, for at least one further desired magnet position (A, B, C, D), a further unambiguous signal value group (20, 20') of the further activation magnets is present over the distance.

11. A magnetic sensor according to any one of the preceding claims, **characterized in that** the switching signal corresponding to a magnet position is generated within a tolerance range which is electronically settable.

12. A magnetic sensor according to any one of the preceding claims, **characterized in that** the sensor elements (8, 10) are integrated in an electronic component.

13. A magnetic sensor according to any one of the preceding claims, **characterized in that** the evaluation unit (14) is arranged together with the sensor elements (8, 10) in a housing (30).

14. A magnetic sensor according to any one of the preceding claims, **characterized in that** it can be lowered into a groove (40), in particular a T-groove or a C-groove of the pneumatic cylinder (34), for holding.

15. A magnetic sensor according to any one of the preceding claims, **characterized in that** a digital interface and/or a bus system for the output of the switching signals (18) is/are present; and wherein the evaluation unit is formed by a microcontroller.

16. A method for determining positions (A, B, C, D) of an activation magnet (2) along a distance (6), in which sensor signals (22, 24) of at least two sensor elements are generated by a magnetic field of the activation magnet (2) at two mutually spaced apart locations in the direction (7) of the distance (6), at a predetermined spacing radially with respect to the movement axis of the activation magnet (2), wherein a plurality of switching signals (18) are output in dependence on the respective positions (A, B, C, D) of the activation magnet (2) and the switching signals are set electronically for different positions, wherein the two corresponding sensor signals (22, 24) are present for each magnet position (A, B, C, D) of the activation magnet over the entire distance (6) and thus the spacing of the sensor elements is independent of the length of the distance and the two sensor signals (22, 24) form an unambiguous signal value pair (20, 20') for the current magnet position (A, B, C, D) of the activation magnet (2), said signal value pair being evaluated for generating the switching signal (18), and an unambiguous position signal is generated, **characterized in that** a spacing (12) of the sensor elements (8, 10) is smaller than the distance (6).

17. A method according to claim 16, **characterized in that** the sensor signals (22, 24) are generated by detecting a component of the magnetic field which is radial with respect to the direction of movement (7) of the activation magnet (2) by means of the sensor elements.

18. A method according to one of the preceding claims 16 to 17, **characterized in that** the switching signals (18) are each taught.

19. A method according to any one of the preceding claims 16 to 18, **characterized in that** the switching signal corresponding to a magnet position is generated within a range of tolerances the range of tolerances is set electronically.

20. A method according to any one of the preceding claims 16 to 19, **characterized in that** the signal value group corresponding to the switching signal (18) or a starting of a teaching mode is input with coded impulse sequences to a combined input and output of the evaluation unit (14) for outputting the switching signals (18).

## Revendications

1. Capteur magnétique (1) pour la détermination de positions (A, B, C, D) d'un aimant émetteur (2) le long d'un trajet (6) avec au moins deux éléments capteurs (8, 10), dans lequel les éléments capteurs sont agencés le long du trajet à une distance l'un de l'autre et les deux détectent au moins une composante d'un champ magnétique de l'élément émetteur (2), dans lequel il est prévu une unité d'évaluation (14) reliée avec les éléments capteurs (8, 10) pour générer plusieurs signaux de commutation (18) correspondant respectivement à une position d'aimant désirée (A, B, C, D), et les signaux de commutation sont réglables par voie électronique pour différentes positions,
dans lequel chaque élément capteur (8, 10) détecte la totalité du trajet (6) et ainsi la distance des éléments capteurs est indépendante de la longueur du trajet et pour chaque position magnétique désirée (A, B, C, D) il existe un groupe de valeurs de signaux (20, 20') univoque sur le trajet (6) pour les deux éléments capteurs (8, 10) pour engendrer le signal de commutation dans l'unité d'évaluation (14), et celle-ci génère un signal de position univoque, **caractérisé en ce qu'**une distance (12) des éléments capteurs (8, 10) est plus petite que le trajet (6).

2. Capteur magnétique selon la revendication 1, **caractérisé en ce que** celui-ci est réalisé pour la détection de la position d'un piston, portant un aimant émetteur (2), d'un cylindre pneumatique (34).

3. Capteur magnétique selon l'une des revendications précédentes, **caractérisé en ce que** l'aimant émetteur (2) est un aimant permanent (3).

4. Capteur magnétique selon l'une des revendications précédentes, **caractérisé en ce que** les éléments capteurs (8, 10) sont des capteurs de Hall ou des bobines électriques ou encore des éléments magnétiques à variation de résistance.

5. Capteur magnétique selon l'une des revendications précédentes, **caractérisé en ce que** les éléments capteurs (8, 10) détectent une composante radiale du champ magnétique de l'aimant émetteur (2).

6. Capteur magnétique selon l'une des revendications précédentes, **caractérisé en ce que** les éléments capteurs (8, 10) détectent une composante axiale du champ magnétique de l'aimant émetteur (2).

7. Capteur magnétique selon la revendication 6, **caractérisé en ce qu'**il est prévu au moins une touche (28) pour démarrer le processus d'apprentissage des signaux de commutation (18), et il est prévu au moins un dispositif d'affichage (36, 36') pour l'affichage du processus d'apprentissage.

8. Capteur magnétique selon l'une des revendications précédentes, **caractérisé en ce qu'**une sortie de l'unité d'évaluation (14) destinée à délivrer le signal de commutation (18) est réalisée additionnellement à titre d'entrée pour les signaux d'entrée, afin de régler le groupe de valeurs de signaux correspondant au signal de commutation (18) ou de démarrer un processus d'apprentissage.

9. Capteur magnétique selon la revendication 8, **caractérisé en ce que** les signaux d'entrée sont des successions d'impulsions codées.

10. Capteur magnétique selon l'une des revendications précédentes, **caractérisé en ce qu'**il est prévu plusieurs aimants émetteurs le long du trajet, et ceux-ci présentent des intensités de champ magnétique différentes et pour au moins une autre position d'aimant souhaitée (A, B, C, D) il existe un autre groupe de valeurs de signaux (20, 20') univoque de l'autre aimant émetteur.

11. Capteur magnétique selon l'une des revendications précédentes, **caractérisé en ce que** le signal de commutation correspondant à une position d'aimant est susceptible d'être engendré à l'intérieur d'une plage de tolérances qui est réglable par voie électronique.

12. Capteur magnétique selon l'une des revendications précédentes, **caractérisé en ce que** les éléments capteurs (8, 10) sont intégrés dans un composant électronique.

13. Capteur magnétique selon l'une des revendications précédentes, **caractérisé en ce que** l'unité d'évaluation (14) est agencée dans un boîtier (30) conjointement avec les éléments capteurs (8, 10).

14. Capteur magnétique selon l'une des revendications précédentes, **caractérisé en ce que** celui-ci est réalisé, pour sa monture, de manière à pouvoir être enfoncé dans une gorge (40), en particulier une gorge en T ou une gorge en C du cylindre pneumatique (34).

15. Capteur magnétique selon l'une des revendications précédentes, **caractérisé en ce qu'**il est prévu une interface numérique et/ou un système de bus pour la délivrance des signaux de commutation (18), et l'unité d'évaluation est formée par un microcontrôleur.

16. Procédé pour la détermination de positions (A, B, C, D) d'un aimant émetteur (2) le long d'un trajet (6), dans lequel des signaux de capteur (22, 24) sont engendrées par au moins deux éléments capteurs à deux emplacements écartés l'un de l'autre en direction (7) du trajet (6), à une distance déterminée radialement par rapport à l'axe de déplacement de l'aimant émetteur (2) par un champ magnétique de l'aimant émetteur (2), dans lequel plusieurs signaux de commutation (18) sont délivrés en dépendance des positions respectives (A, B, C, D) de l'aimant émetteur (2) et les signaux de commutation sont réglés par voie électronique pour des positions différentes, dans lequel les deux signaux de capteur correspondant (22, 24) existent pour chaque position d'aimant (A, B, C, D) de l'aimant émetteur sur la totalité du trajet (6) et ainsi la distance des éléments capteurs est indépendante de la longueur du trajet, et les deux signaux de capteur (22, 24) forment une paire de valeurs de signaux (20, 20') univoque pour la position d'aimant momentanée (A, B, C, D) de l'aimant émetteur (2), et celui-ci est évalué pour engendrer le signal de commutation (18) et on génère un signal de position univoque, **caractérisé en ce qu'**une distance (12) des éléments capteurs (8, 10) est plus petite que le trajet (6).

17. Procédé selon la revendication 16, **caractérisé en ce que** les signaux de capteur (22, 24) sont engendrés au moyen des éléments capteurs par détection d'une composante radiale du champ magnétique par rapport à la direction de déplacement (7) de l'aimant émetteur (2).

18. Procédé selon l'une des revendications 16 à 17, **caractérisé en ce que** les signaux de commutation (18) sont respectivement appris.

19. Procédé selon l'une des revendications 16 à 18, **caractérisé en ce que** le signal de commutation correspondant à une position d'aimant est engendré à l'intérieur d'une plage de tolérances, et la plage de tolérances est réglée par voie électronique.

20. Procédé selon l'une des revendications 16 à 19, **caractérisé en ce que** le groupe de valeurs de signaux correspondant au signal de commutation (18), ou bien un démarrage d'un processus d'apprentissage avec des successions d'impulsions codées sont saisis sur une entrée/sortie combinée de l'unité d'évaluation (14) pour délivrer les signaux de commutation (18).
